# EUROPEAN PATENT APPLICATION

(11) **EP 2 979 922 A1**
(43) Date of publication of application: **03.02.2016**
(21) Application number: 14774883.4
(22) Date of filing: 11.03.2014
(51) Int. Cl.: B60N 3/04, A47G 27/02

(54) **CARPET WITH CABLE, METHOD FOR PRODUCING CARPET WITH CABLE, ATTACHMENT MEMBER, AND CABLE WITH ATTACHMENT MEMBER**

(30) Priority: 28.03.2013 JP 2013067761
(71) Applicant: Sumitomo Wiring Systems, Ltd., Yokkaichi-shi, Mie 510-8503 (JP)
(72) Inventor: YOSHIDA Keisuke, Yokkaichi-shi Mie 510-8503 (JP); KAJIWARA Yasuhiro, Yokkaichi-shi Mie 510-8503 (JP)
(74) Representative: Takeuchi, Maya
(86) International application number: PCT/JP2014/056232
(87) International publication number: WO 2014/156598

(57) **Abstract**

The present invention provides a carpet with cable capable of inhibiting noise. The carpet is provided on a floor on a vehicle interior. The cable is routed along the carpet on an opposite side from the vehicle interior. An attachment member is molded by hot-pressing a nonwoven fabric into a shape configured by a depression and a pair of wings. The pair of wings are fixated to the carpet at respective positions with a center axis of the cable therebetween, and the depression is integrally connected to the pair of wings and covers the cable on an opposite side from the carpet.

## Description

### FIELD OF THE INVENTION

The present invention relates to a carpet with cable, a method for producing the carpet with cable, an attachment member, and a cable with the attachment member.

### BACKGROUND OF THE INVENTION

A wire harness connecting electric devices to each other is routed on an interior of an automobile. Examples of the wire harness include a wire harness routed below a floor carpet on a vehicle interior (e.g., Patent Literature 1). In Patent Literature 1, the wire harness is routed between the floor carpet and a locker panel provided below the floor carpet.

In addition, in Patent Literature 1, the locker panel, floor carpet, and wire harness are fixated to one another by carpet fasteners. A harness holder, an engagement projection, and an insertion portion are formed on the carpet fasteners.

The harness holder has a structure similar to a so-called fastening band, and is wound around the wire harness to hold the wire harness. The insertion portion is inserted into an attachment hole formed on the locker panel to engage therewith. A plurality of engagement flanges are formed on the engagement projection in a projection direction, the engagement flanges being inserted into engagement holes formed in the carpet while undergoing bending deformation, then returning to an original shape due to a restorative force, with the engagement projection engaged in the engagement hole on one engagement flange.

### RELATED ART

### Patent Literature

Patent Literature 1: Japanese Patent Laid-open Publication No. 2011-213172

### SUMMARY OF THE INVENTION

### Problems to Be Solved by the Invention

Resin is in widespread use as a material having flexibility. A comparatively hard material, such as plastic, can be employed as such a resin having flexibility. Thus, in Patent Literature 1, when such a resin is used as the carpet fastener, noise may be caused by the carpet fastener striking other members. In particular, vibration associated with unevenness in a road surface is readily transmitted in a bottom portion of an automobile, and therefore noise is likely to occur. In addition, an impact with a comparatively hard resin may cause friction to the carpet fastener or other members.

In this connection, the present invention provides a carpet with cable capable of inhibiting noise and friction.

### Means for Solving the Problems

A first aspect of a carpet with cable according to the present invention includes: a carpet provided to a floor on a vehicle interior; a cable routed along the carpet on an opposite side from the vehicle interior; and an attachment member molded by hot-pressing a nonwoven fabric into a shape configured by a depression and a pair of wings, the pair of wings being fixated to the carpet at respective positions with a center axis of the cable therebetween, and the depression being integrally connected to the pair of wings and covering the cable on an opposite side from the carpet.

A second aspect of the carpet with cable according to the present invention is the carpet with cable according to the first aspect, in which through-holes are formed in the carpet at positions having the center axis of the cable therebetween, two ends of the depression are respectively passed through the pair of through-holes and are respectively connected to the pair of wings on the vehicle interior side, and the pair of wings are fixated to the carpet on the vehicle interior side.

A third aspect of the carpet with cable according to the present invention is the carpet with cable according to the first aspect, in which the pair of wings are fixated to the carpet on the opposite side from the vehicle interior.

A fourth aspect of the carpet with cable according to the present invention is the carpet with cable according to any one of the first to third aspects, in which the nonwoven fabric includes a plurality of elementary fibers and a thermoplastic adhesive resin fixating the elementary fibers to each other, and in which the pair of wings are fixated to the carpet via the adhesive resin.

A fifth aspect of the carpet with cable according to the present invention is the carpet with cable according to the fourth aspect, in which the carpet includes a second thermoplastic adhesive resin, and the pair of wings are fixated to the carpet by the adhesive resin and the second adhesive resin.

A sixth aspect of the carpet with cable according to the present invention is the carpet with cable according to one of the fourth and fifth aspects, in which the pair of wings are fixated to the carpet by ultrasonic welding.

A method for producing a carpet with cable according to the present invention is a method for producing the carpet with cable according to any one of the first to sixth aspects, the method including: a first step of provisionally fixating the cable to the attachment member in a state where the depression covers the cable; and a second step of fixating the pair of wings to the carpet after performing the first step.

An attachment member according to the present invention is an attachment member capable of attaching a cable to a carpet, provided to a floor on a vehicle interior, on an opposite side from the vehicle interior, the attachment member having a shape configured by a depression and a pair of wings molded by hot-pressing a nonwoven fabric, the pair of wings being capable of fixating to the carpet at respective positions with a center axis of the cable therebetween, and the depression being integrally connected to the pair of wings and covering the cable on an opposite side from the carpet.

A cable with attachment member according to the present invention is a cable with an attachment member capable of attaching to a carpet, provided to a floor on a vehicle interior, on an opposite side from the vehicle interior, the cable with attachment member including: a cable; and an attachment member provisionally fixated to the cable, the attachment member having a shape configured by a depression and a pair of wings molded by hot-pressing a nonwoven fabric, the pair of wings being capable of fixating to the carpet at respective positions with a center axis of the cable therebetween, and the depression being integrally connected to the pair of wings and covering the cable on an opposite side from the carpet.

### Effect of the Invention

According to the first aspect of the carpet with cable, the attachment member, and the cable with attachment member according to the present invention, the cable is attached to the carpet using the attachment member. Although vibration due to unevenness in a road surface is readily transmitted in a bottom portion of the vehicle, the attachment member is formed by the nonwoven fabric, and therefore noise is unlikely to be caused even when the attachment member strikes other members due to the vibration. In addition, the vibration is readily absorbed and therefore is unlikely to be transmitted to the vehicle interior. Moreover, friction between the attachment member and other members is unlikely to occur. The nonwoven fabric itself is also friction-resistant.

According to the second aspect of the carpet with cable according to the present invention, the attachment member is fixated to the carpet on the opposite side from the cable, and therefore the attachment member can be more firmly fixated to the carpet.

According to the third aspect of the carpet with cable according to the present invention, there is no need for the attachment member to be present on the vehicle interior side of the carpet, and therefore an attractive appearance is not compromised.

According to the fourth aspect of the carpet with cable according to the present invention, manufacturing costs can be reduced as compared to a case where the carpet is fixated to the wings by a separate adhesive.

According to the fifth aspect of the carpet with cable according to the present invention, the second adhesive resin of the carpet is used in addition to the adhesive resin of the wings. Thus, during adhesion, even when the adhesive resin does not seep into the carpet, the members can be fixated by the adhesive resin and the second adhesive resin mixing together. Accordingly, an amount of time required for fixation can be reduced.

The sixth aspect of the carpet with cable according to the present invention is useful in that a welding cycle becomes shorter and electrical consumption is also low.

According to the method for producing the carpet with cable according to the present invention, the cable and the attachment member can be treated as an integral component due to provisional fixation, and therefore the second step is facilitated.

### BRIEF DESCRIPTION OF THE DRAWINGS

[Fig. 1] schematically illustrates an exemplary wire harness routing.
[Fig. 2] is a perspective view illustrating a conceptual example of a wire harness attachment structure.
[Fig. 3] is a cross-sectional view illustrating the conceptual example of the wire harness attachment structure.
[Fig. 4] is a plan view illustrating the conceptual example of the wire harness attachment structure.
[Fig. 5] is a plan view illustrating the conceptual example of the wire harness attachment structure.
[Fig. 6] is a cross-sectional view illustrating the conceptual example of the wire harness attachment structure.
[Fig. 7] is a plan view illustrating the conceptual example of the wire harness attachment structure.
[Fig. 8] is a conceptual cross-sectional view illustrating an attachment member being elastically deformed.

### MODE FOR CARRYING OUT THE INVENTION

### First Embodiment.

### [Wire Harness Routing]

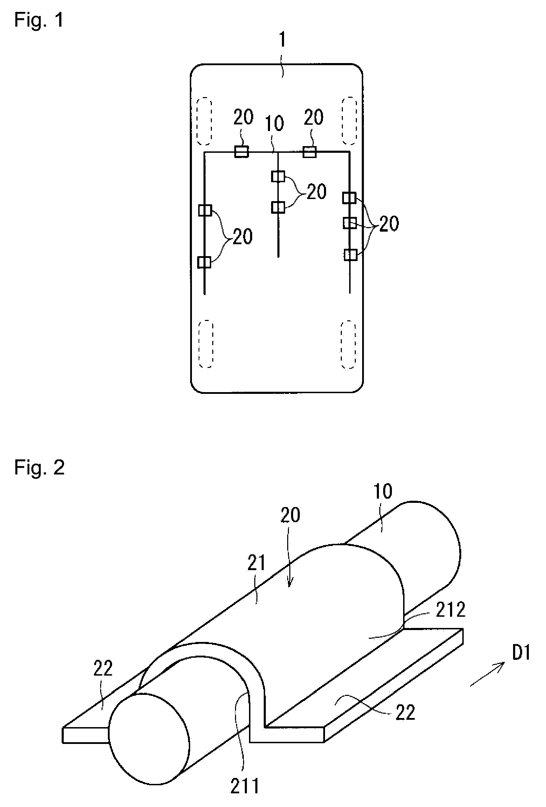

Fig. 1 schematically illustrates an exemplary wire harness routing in an automobile. Fig. 1 schematically illustrates an outer form of an automobile 1 as seen from vertically above in substantially a rectangular shape, and tires of the automobile 1 are shown by dashed lines. In the example of Fig. 1, the automobile 1 advances forward toward an upper part of the drawing sheet, and reverses backward toward a lower part of the drawing sheet. In addition, a wire harness 10 and an attachment member 20 fixating the wire harness 10 are depicted in the example of Fig. 1. Other elements of the configuration of the automobile 1 differ from the principles of the instant application and therefore are omitted from the drawing.

The wire harness 10 is formed by bundling together a plurality of electric wires, for example. The wire harness 10 connects electric devices (not shown in the drawings) provided to the automobile 1 to each other, and is routed on an interior of the automobile 1 as appropriate. In the example of Fig. 1, the wire harness 10 branches and merges as appropriate, and extends in a vehicle width direction on a front seat side, for example, and extends rearward in a vehicle length direction (toward a rear seat side) on both sides and in the center of the vehicle width direction. The wire harness 10 is, for example, connected at one end to an electric device (not shown) provided to the front seat side and is connected at another end to another electric device (e.g., a door lock, door knob, or the like; not shown).

These wire harnesses 10 are routed on the interior of the automobile 1, for example under a floor, so as to not be visible from within the vehicle. In other words, a floor carpet (not shown in the drawing) is provided on a vehicle body floor surface (panel) of the automobile 1, and the wire harness 10 is provided on an opposite side of the floor carpet (i.e., vertically downward) from the vehicle interior. The floor carpet can employ, for example, a fibrous member, or a member formed by a high polymer material such as rubber or polyvinyl chlorine.

In the present embodiment, the wire harness 10 is fixated to the floor carpet at an appropriate position by the attachment member 20. Hereafter, an attachment structure of the wire harness 10 is described in detail.

### [Attachment Structure of Wire Harness]

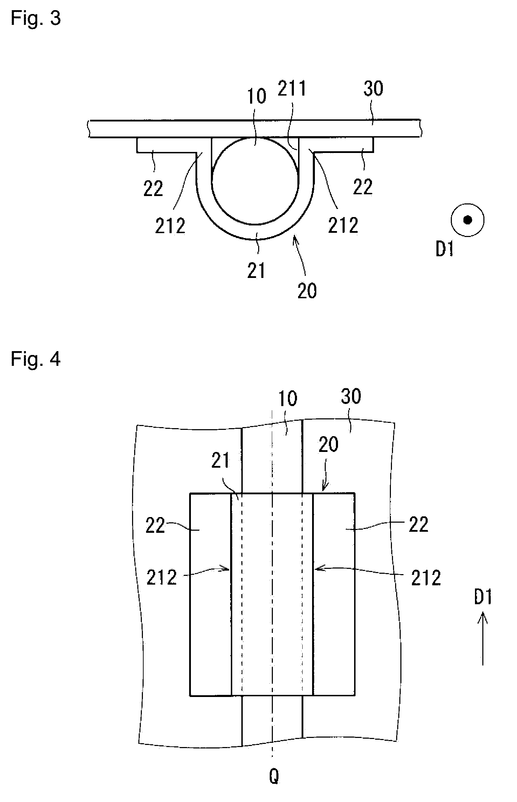

Fig. 2 is a perspective view illustrating a conceptual example of the attachment structure of the wire harness 10, and views the wire harness 10 and the attachment member 20 from vertically below (i.e., from below the floor). Thus, in Fig. 2, downward on the drawing sheet is a vehicle interior side. Fig. 3 is a cross-sectional view illustrating the conceptual example of the attachment structure in a cross-section perpendicular to a length direction of the wire harness 10;

Fig. 4 is a plan view illustrating the conceptual example of the attachment structure viewed from vertically below.

Although the wire harness 10 is formed by bundling together a plurality of electric wires, in Figs. 2 to 4, the wire harness 10 is depicted schematically as a cylinder. This is carried through the other drawings referenced below. As shown in Figs. 2 to 4, the wire harness 10 is routed along a floor carpet 30 on an opposite side of the floor carpet 30 from the vehicle interior.

The attachment member 20 is formed of a nonwoven fabric. The attachment member 20 is formed by hot-pressing the nonwoven fabric. A nonwoven fabric that includes interwoven elementary fibers and an adhesive resin (also referred to as a binder) can be used as the nonwoven fabric. As the adhesive resin, a resin having a melting point lower than that of the elementary fibers (for example, between 110°C and 115°C) can be utilized.

When the nonwoven fabric is heated to a processing temperature lower than the melting point of the elementary fibers and higher than the melting point of the adhesive resin, the adhesive resin melts and soaks in between the elementary fibers. Thereafter, when the nonwoven fabric cools to a temperature below the melting point of the adhesive resin, the adhesive resin solidifies in a state bonding the elementary fibers with one another. The nonwoven fabric then becomes harder than in a state prior to heating and is maintained in a required molded shape.

The elementary fiber should be able to hold a fiber form at the melting point of the adhesive resin and various kinds of fibers can be used as the elementary fiber besides a resin fiber. Further, a thermoplastic resin fiber having a melting point lower than the melting point of the elementary fibers can be used as the adhesive resin.

An example of a combination of the elementary fiber and the adhesive resin is using a resin fiber of PET (polyethylene terephthalate) as the elementary fiber and a copolymer resin of PET and PEI (polyethylene isophthalate) as the adhesive resin. In this case, the melting point of the elementary fiber is about 250°C and the melting point of the adhesive resin is between 110°C and 150°C. Therefore, when the nonwoven fabric is heated to a temperature of between 110°C and 250°C, the adhesive resin melts and soaks in between the elementary fibers, which maintain a fibrous shape and do not melt. Then, when the nonwoven fabric reaches a temperature lower than the melting point of the adhesive resin, the adhesive resin solidifies in a state bonding the elementary fibers with one another. Thereby, the nonwoven fabric hardens and maintains a predetermined molded shape.

In addition, hot-pressing refers to a process of inserting the nonwoven fabric (object to be processed) between dies and applying pressure to the dies in a heated state to mold the nonwoven fabric.

The attachment member 20 is molded by hot-pressing into a shape configured by a depression 21 and a pair of wings 22.

With reference to Fig. 4 (i.e., viewing perpendicularly with respect to the floor carpet 30), the pair of wings 22 are each fixated to the floor carpet 30 at a position having a center axis Q of the wire harness 10 therebetween. In the depictions of Figs. 2 to 4, the pair of wings 22 have substantially a flat rectangular shape, a long edge of which is arranged so as to follow a length direction D1 of the wire harness 10. In addition, the pair of wings 22 are in contact with the floor carpet 30 on a comparatively broad surface. Any method of fixating the pair of wings 22 to the floor carpet 30 may be used; however, for example, an adhesive can be placed between the wings 22 and the floor carpet 30 to fixate them.

The depression 21 is integrally connected to the pair of wings 22, and covers a length direction D1 portion of the wire harness 10 on an opposite side from the floor carpet 30. With reference to Fig. 3 (i.e., viewing a cross-section perpendicular to the length direction D1), the depression 21 has substantially a "U" shape, for example. In the depictions of Figs. 2 to 4, the depression 21 has a shape in which the "U" shape extends uniformly along the length direction D1. Also, by positioning the portion of the wire harness 10 on an interior of the "U" shaped depression 21, the depression 21 covers the portion of the wire harness 10.

Two end portions 212 of the "U" shape of the depression 21 are respectively, integrally connected to the pair of wings 22. With reference to Fig. 3 (i.e., in the cross-section perpendicular to the length direction D1), the pair of wings 22 extend along the floor carpet 30 so as to mutually move away from the depression 21. The pair of wings 22 and the two end portions 212 are connected so as to form substantially an "L" shape.

With such a configuration, the attachment member 20, together with the floor carpet 30, encircles the portion of the wire harness 10. Accordingly, the wire harness 10 is attached to the floor carpet 30 by the attachment member 20.

Moreover, the attachment member 20 is formed of the nonwoven fabric. Although vibration associated with unevenness in a road surface is readily transmitted in a bottom portion of the automobile 1, the attachment member 20 provided to the bottom portion is formed by the nonwoven fabric, and therefore noise is unlikely to be caused even when the attachment member 20 strikes other members due to vibration. This is because the nonwoven fabric is a fiber member and is unlikely to create an impact noise. In addition, the nonwoven fabric is pliant as compared to a resin such as plastic and readily absorbs vibration. Accordingly, friction against other members due to the vibration is also unlikely to occur, and the vibration is unlikely to be transmitted to the vehicle interior. The nonwoven fabric itself is also friction-resistant, and therefore the attachment member 20 has a high degree of friction resistance.

The attachment member 20 is molded by hot-pressing the nonwoven fabric. Accordingly, the attachment member 20 can be made harder as compared to a case where no press processing is performed on the nonwoven fabric. Thus, wobbling of the wire harness 10 in association with vibration can be inhibited and the wire harness 10 can be more firmly held. In other words, noise is inhibited as compared to a resin, and retention force is improved as compared to a nonwoven fabric that is not press processed.

The wire harness 10 may also be attached to the floor carpet 30 at a plurality of positions using a plurality of attachment members 20. For example, the wire harness 10 routed as shown in Fig. 1 can be attached to the floor carpet 30 in a plurality of positions. Accordingly, the routed wire harness 10 and the floor carpet 30 can be handled as an integral component. Thus, for example, the wire harness 10 and the floor carpet 30 can be fixated together as described above using the attachment member 20 at a predetermined first factory, then the floor carpet 30 with the attached wire harness 10 can be attached to a vehicle body at a second factory. In such a case, there is no need for the wire harness 10 to be re-routed and fixated at the second factory, and so a work process at the second factory can be reduced. This is useful when the second factory is a customer.

The position and number of attachment members 20 are not limited to those shown in Fig. 1 and can be defined as appropriate. In addition, how the wire harness 10 is routed can be defined as desired. Also, although the attachment member 20 (more specifically, the depression 21) covers a portion of the wire harness 10 in the length direction D1 in the depictions of Figs. 2 to 4, the attachment member 20 may also cover the entire wire harness 10.

A depth of the depression 21 (depth in a direction perpendicular to the floor carpet 30) may also be shallower than an outer diameter of the wire harness 10. In such a case, the attachment member 20 and the floor carpet 30 can hold the wire harness 10 while pressing down on it. Thus, the retention power on the wire harness 10 can be improved.

Alternatively, the depth of the depression 21 may also be deeper than the outer diameter of the wire harness 10. In such a case, bumps in the floor carpet 30 due to the wire harness 10 can be avoided. Thus, an attractive appearance is not compromised.

In such a case, the depression 21 and the floor carpet 30 hold the wire harness 10 such that the wire harness 10 is capable of being loosely inserted. Thus, the wire harness 10 may be displaced in the length direction. Accordingly, in such a case, the wire harness 10 and the floor carpet 30 are preferably caught on a connector provided to an end of the wire harness 10. Thereby, the wire harness 10 can be prevented from slipping out of the attachment member 20.

Also, a width of the depression 21 (width in a direction perpendicular to the length direction D1 and parallel to the floor carpet 30) may also be slightly smaller than the outer diameter of the wire harness 10. Thereby, pressure can be applied to the wire harness 10 in the width direction to hold it.

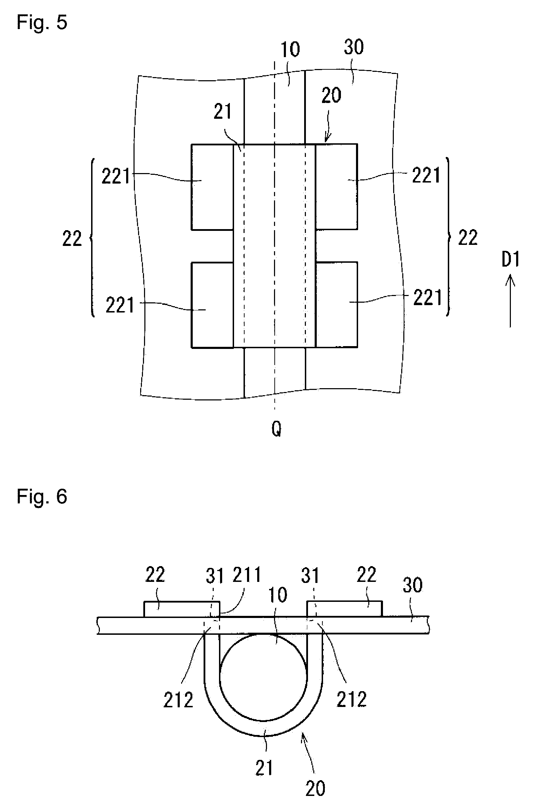

Also, in Figs. 2 to 4, a length of the pair of wings 22 in the length direction D1 is defined as equal to the length of the depression 21 in the length direction D1. However, the present invention is not limited to this and the lengths may also be different. For example, each of the wings 22 may be provided not to the entire length direction D1 of the depression 21 but instead to only a portion of it. For example, in Fig. 5, each of the wings 22 are formed by two wings 221, which are separate from each other in the length direction D1. In other words, the wings 221 are provided to certain portions. Accordingly, an amount of nonwoven fabric required to mold the attachment member 20 can be reduced.

### [Fixation Method]

The pair of wings 22 are fixated to the floor carpet 30 by any desired method. For example, an adhesive may be separately inserted between the floor carpet 30 and the wings 22, fixating the two members together via the adhesive.

Alternatively, in a case where a binder resin having a melting point lower than a heatproof temperature of the floor carpet 30 is used as a binder resin for the attachment member 20, the floor carpet 30 and the wings 22 may be fixated together using the binder resin. In other words, by applying heat to the wings 22, the binder resin of the wings 22 is melted and brought into contact with the floor carpet 30, after which the heating is ended and the binder resin is hardened, thereby fixating the floor carpet 30 and the wings 22 together. Accordingly, production cost can be reduced as compared to a case using a separate adhesive.

The floor carpet 30 is a fibrous member that includes a thermoplastic binder resin, and in a case where the melting point of the binder resin is lower than the melting point of the elementary fibers of the wings 22, this binder resin may also be used. In other words, by heating the floor carpet 30 at a temperature higher than the melting point of the binder resin of the floor carpet 30, the floor carpet 30 and the wings 22 are fixated together using the binder resin.

Alternatively, the binder resins of both the wings 22 and the floor carpet 30 may be used. In other words, by heating the floor carpet 30 and the wings 22 at a temperature higher than the melting point of both binder resins to melt both binder resins, the wings 22 and the floor carpet 30 are fixated together using both binder resins. Accordingly, even when the binder resin of one of the wings 22 and the floor carpet 30 does not fully seep in between the elementary fibers of the other, so long as the binder resins of the floor carpet 30 and the wings 22 are fully in contact with each other, they can be fixated together. Therefore, the amount of time required for fixation can be shortened.

In addition, although any method for heating the binder resin may be used, heat may be applied by so-called ultrasonic welding. Ultrasonic welding refers to applying pressure from ultrasonic vibrations to the floor carpet 30 and the wings 22 to generate frictional heat, and thereby imparting a temperature higher than the melting point to the binder resin. Such ultrasonic welding is useful in that a welding cycle becomes shorter and electrical consumption is also low.

### [Exemplary Manufacturing Method]

First, hot-pressing is performed on a predetermined nonwoven fabric, which is molded into a shape configured by the depression 21 and the pair of wings 22. More specifically, a bottom mold having a substantially "U" shaped depression in a portion of a contact surface and a top mold having a smaller, substantially "U" shaped projection on a portion of a contact surface are arranged such that the depression and the projection face each other. Furthermore, the flat nonwoven fabric is arranged between the bottom mold and the top mold, which are brought together while heating is performed, thereby molding the nonwoven fabric into a shape having the depression 21 and the pair of wings 22. The attachment member 20 can thus be formed.

The attachment member 20 can be molded by a single hot-pressing using the top mold and bottom mold in this way. Therefore, the attachment member 20 having the depression 21 and the pair of wings 22 is suited for hot-press molding.

Next, the wire harness 10 is provisionally fixated to the attachment member 20 while inserting the wire harness 10 into the depression 21. The provisional fixation may be executed using any method and can be achieved by, for example, placing tape having an adhesive applied to both surfaces between the depression 21 and the wire harness 10. Paper, polyvinyl chloride, or the like can be used as a substrate for the double-sided tape, for example.

Next, the attachment member 20 to which the wire harness 10 is provisionally fixated is arranged on the floor carpet 30 and fixated thereto. More specifically, the attachment member 20 is arranged such that an opening of the depression 21 is sealed by the floor carpet 30, and the pair of wings 22 and the floor carpet 30 are fixated together. An exemplary fixation method is as described above.

According to a manufacturing method of this kind, the wire harness 10 and the attachment member 20 are provisionally fixated together; therefore, the wire harness 10 and the attachment member 20 can be handled as an integral component in subsequent steps. Thus, the wire harness 10 and the attachment member 20 are readily positioned with respect to the floor carpet 30. Accordingly, workability can be improved. Thus, for example, in a case where the attachment member 20 is provisionally fixated to the wire harness 10 at the predetermined first factory, then the wire harness 10 is attached to the floor carpet 30 using the attachment member 20 at the second factory, workability at the second factory can be improved. This is useful when the second factory is a customer.

### Second Embodiment.

Hereafter, a wire harness attachment structure according to a second embodiment is described. In this example, primarily features which are distinct from those of the first embodiment are described and redundant descriptions are omitted.

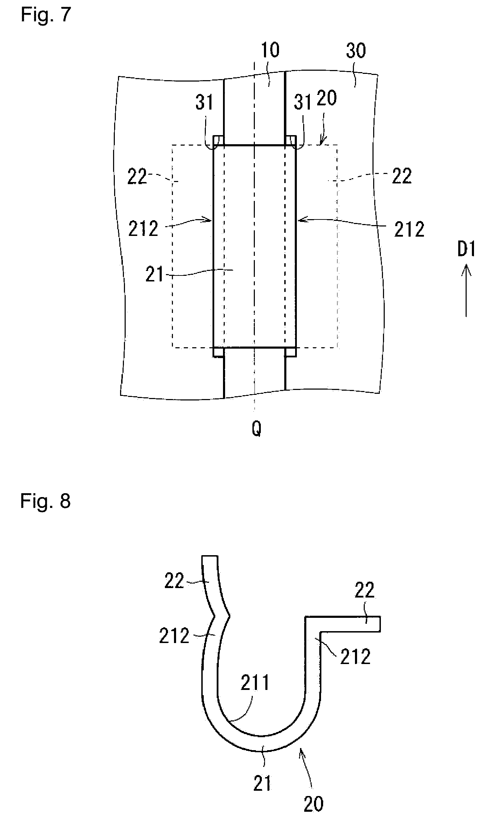

Figs. 6 and 7 illustrate a conceptual example configuration of an attachment structure of the wire harness 10 according to the second embodiment. Fig. 6 illustrates the attachment structure in a cross-section perpendicular to the length direction D1; Fig. 7 is a plan view illustrating the conceptual example of the attachment structure viewed from vertically below.

A pair of through-holes 31 are formed in the floor carpet 30. With reference to Fig. 7 (i.e., viewing perpendicularly with respect to the floor carpet 30), the pair of through-holes 31 are respectively formed at positions having the center axis Q of the wire harness 10 therebetween. The through-holes 31 have an elongated shape extending along the length direction D1 of the wire harness 10, for example.

The depression 21 covers the wire harness 10 on the opposite side from the floor carpet 30, as in the first embodiment. However, unlike the first embodiment, the two ends 212 of the depression 21 are each passed through the pair of through-holes 31, respectively, extending toward the vehicle interior (opposite direction from the wire harness 10). In addition, the two ends 212 are integrally connected to the pair of wings 22 on the vehicle interior side.

The pair of wings 22 are provided on the vehicle interior side relative to the floor carpet 30 and extend along the floor carpet 30 from the two ends 212. Furthermore, the pair of wings 22 are fixated to the floor carpet 30 on the vehicle interior side.

Using such an attachment structure, the depression 21 and the pair of wings 22 are engaged with the floor carpet 30. Thus, the fixating force of the attachment member 20 and the floor carpet 30 can be improved.

### [Exemplary Attachment Method of Attachment Member]

The attachment member 20 is preferably formed of a commonly known nonwoven fabric that is capable of elastic deformation. As an example of such a nonwoven fabric, a nonwoven fabric can be used which employs, as the binder resin, an elastic resin (such as synthetic rubber) which exhibits elasticity in a cured state. Fig. 8 is a conceptual view illustrating an exemplary state in which the attachment member 20 is elastically deformed. In other words, the wing 22 and the end 212 are elastically deformed such that a unit configured by the wing 22 and the end 212 connected thereto approaches a substantially straight line form. In other words, the wing 22 and the end 212 are elastically deformed such that an angle formed by the wing 22 and the end 212 (<180°) approaches 180°.

In the method attaching the attachment member 20 of this kind to the floor carpet 30, for example, first a first wing 22 is passed through a first through-hole 31 and the first wing 22 is passed entirely into the vehicle interior side. Next, a unit configured by a second wing 22 and the end 212 connected thereto is elastically deformed so as to approach a straight line form, and in this posture the second wing 22 is passed through a second through-hole 31. Furthermore, the second wing 22 is passed entirely into the vehicle interior side, and in this state an external force is removed. Accordingly, the second wing 22 returns to the shape connected to the end 212 at the original angle, and the pair of wings 22 face the floor carpet 30 on the vehicle interior side. Thus, the attachment member 20 is engaged with the floor carpet 30.

Moreover, there is no need to pass the pair of wings 22 through the through-holes 31 one at a time; instead, both members in the pair of wings 22 may be respectively passed through the pair of through-holes 31 at substantially the same time. For example, both members in the pair of wings 22 may be elastically deformed such that the attachment member 20 assumes an overall "U" shape and, in this posture, both members in the pair of wings 22 may be respectively passed through the pair of through-holes 31 at substantially the same time.

In the second embodiment, as noted above, the pair of wings 22 are provided on the vehicle interior side with respect to the floor carpet 30, and are engaged with the floor carpet 30 by the pair of wings 22 and the two ends 212; thereby, the fixating force of the attachment member 20 and the floor carpet 30 is improved. Meanwhile, in the first embodiment, the pair of wings 22 are fixated to the floor carpet 30 on the wire harness 10 side, and the entire attachment member 20 is provided closer to the wire harness 10 side than the floor carpet 30. Accordingly, the attachment member 20 is not seen by a passenger. Therefore, the attachment structure of the first embodiment is preferred for not compromising the attractive appearance.

In addition, the floor carpet 30 is pressed vertically downward by a passenger stepping on the floor carpet 30. In association with this, the wire harness 10 is also pressed vertically downward; however, when the wire harness 10 makes contact with a body floor surface of the automobile 1, the wire harness 10 is supported by the body floor surface. In this state, when the floor carpet 30 is pressed vertically downward, in the attachment structure 20 of the second embodiment, a force acts to separate the wings 22 and the floor carpet 30. In addition, in a case where the fixation is broken, the wing 22 projects toward the vehicle interior. Meanwhile, according to the attachment structure of the first embodiment, even when the passenger steps on the floor carpet 30, the wing 22 does not project toward the vehicle interior in this way.

Furthermore, in the first and second embodiments, a description was given in which an object to be attached to the floor carpet 30 was the wire harness 10, which was formed by bundling together a plurality of electric wires. However, the object to be attached may also be a single electric wire, and is not limited to electric wires; the object to be attached may instead be an optical fiber, or a mixture of electric wires and optical fibers. In essence, the object to be attached may be any cable for connecting electric devices.

In the above, the present invention is described in detail. However, the above description is, in all aspects, for exemplary purposes and the present invention is not limited by the description. Numerous modifications not given as examples are understood to be conceivable without departing from the scope of the present invention.

### DESCRIPTION OF REFERENCE NUMERALS

- 10: Wire harness
- 20: Attachment member
- 21: Depression
- 22: Wing
- 30: Carpet

## Claims

1. A carpet with cable comprising:
a carpet provided to a floor on a vehicle interior;
a cable routed along the carpet on an opposite side from the vehicle interior; and
an attachment member molded by hot-pressing a nonwoven fabric into a shape configured by a depression and a pair of wings, the pair of wings being fixated to the carpet at respective positions with a center axis of the cable therebetween, and the depression being integrally connected to the pair of wings and covering the cable on an opposite side from the carpet.

2. The carpet with cable according to claim 1, wherein through-holes are formed in the carpet at positions having the center axis of the cable therebetween,
two ends of the depression are respectively passed through the pair of through-holes and are respectively connected to the pair of wings on the vehicle interior side, and
the pair of wings are fixated to the carpet on the vehicle interior side.

3. The carpet with cable according to claim 1, wherein the pair of wings are fixated to the carpet on the opposite side from the vehicle interior.

4. The carpet with cable according to any one of claims 1 to 3, wherein the nonwoven fabric comprises:
a plurality of elementary fibers; and
a thermoplastic adhesive resin fixating the elementary fibers to each other, and
wherein the pair of wings are fixated to the carpet via the adhesive resin.

5. The carpet with cable according to claim 4, wherein the carpet includes a second thermoplastic adhesive resin, and
the pair of wings are fixated to the carpet by the adhesive resin and the second adhesive resin.

6. The carpet with cable according to one of claims 4 and 5, wherein the pair of wings are fixated to the carpet by ultrasonic welding.

7. A method for producing the carpet with cable according to any one of claims 1 to 6, the method comprising:
a first step of provisionally fixating the cable to the attachment member in a state where the depression covers the cable; and
a second step of fixating the pair of wings to the carpet after performing the first step.

8. An attachment member capable of attaching a cable to a carpet, provided to a floor on a vehicle interior, on an opposite side from the vehicle interior, wherein
the attachment member has a shape configured by a depression and a pair of wings molded by hot-pressing a nonwoven fabric,
the pair of wings are capable of fixating to the carpet at respective positions with a center axis of the cable therebetween, and
the depression is integrally connected to the pair of wings and covers the cable on an opposite side from the carpet.

9. A cable with an attachment member capable of attaching to a carpet, provided to a floor on a vehicle interior, on an opposite side from the vehicle interior, the cable with attachment member comprising:
a cable; and
an attachment member provisionally fixated to the cable,
wherein the attachment member has a shape configured by a depression and a pair of wings molded by hot-pressing a nonwoven fabric,
the pair of wings are capable of fixating to the carpet at respective positions with a center axis of the cable therebetween, and
the depression is integrally connected to the pair of wings and covers the cable on an opposite side from the carpet.
